# EUROPÄISCHE PATENTSCHRIFT

(11) **EP 2 147 289 B1**
(45) Veröffentlichungstag und Bekanntmachung des Hinweises auf die Patenterteilung: **17.10.2018**
(21) Anmeldenummer: 08758045.2
(22) Anmeldetag: 09.05.2008
(51) Int. Cl.: G01L 7/14, G01L 19/14, G01D 11/24

(54) **SENSOR MIT EINEM DOPPELGEHÄUSE**
SENSOR WITH A DOUBLE HOUSING
CAPTEUR

(30) Priorität: 12.05.2007 DE 102007022305
(43) Veröffentlichungstag der Anmeldung: 27.01.2010
(73) Patentinhaber: Marquardt GmbH, 78604 Rietheim-Weilheim (DE)
(72) Erfinder: SCHULLCKE, Benjamin, 78315 Radolfzell (DE); WEISSER, Dietmar, 78532 Tuttlingen (DE); FAHRLÄNDER, Klaus, 78554 Aldingen (DE); MÜLLER, Heinrich, 78532 Tuttlingen (DE); KAMPF, Florian, 78532 Tuttlingen (DE)
(74) Vertreter: Otten, Roth, Dobler & Partner mbB Patentanwälte
(86) Internationale Anmeldenummer: PCT/DE2008/000787
(87) Internationale Veröffentlichungsnummer: WO 2008/138312

(56) Entgegenhaltungen:
- EP-A- 0 088 270
- EP-A- 0 194 937
- EP-A- 1 184 650
- FR-A- 2 290 612
- GB-A- 2 247 316

## Beschreibung

Die Erfindung betrifft eine Meßvorrichtung für ein zu messendes Medium nach dem Oberbegriff des Patentanspruchs 1.

Bei der Meßvorrichtung handelt es sich um einen Drucksensor. Solche Meßvorrichtungen dienen vor allem zur direkten Messung von Betriebsparametern in wasserführenden Teilen von Geräten, beispielsweise von Hausgeräten.

Es sind Meßvorrichtungen mit einem Gehäuse und mit einer im und/oder am Gehäuse angeordneten, mit dem Medium in Kontakt bringbaren Membran bekannt. Ein Signalgeber steht mit der Membran in Wirkverbindung. Im Inneren des Gehäuses ist ein mit dem Signalgeber in Zusammenwirkung stehender Signalaufnehmer zur Erzeugung eines Meßsignals für das Medium befindlich. Da der Signalaufnehmer strom- und/oder spannungsführende Teile aufweist, sind aufwendige Maßnahmen zur Abdichtung erforderlich, wenn der Sensor in wasserführenden Umgebungen eingesetzt werden soll. Dies gilt insbesondere wenn der Bediener des Geräts unter allen Bedingungen vor elektrischen Schlägen geschützt werden soll.

Weiter ist aus der EP 1 184 650 A1 ein derartiger Drucksensor bekannt, bei dem der Signalaufnehmer zumindest mit dessen strom- und/oder spannungsführenden Teilen und/oder weitere strom- und/oder spannungsführende, mit dem Signalaufnehmer in elektrischer Verbindung stehende Bauteile zweifach gegenüber dem Medium isoliert sind.

Der Signalaufnehmer ist in einer Art von Doppelgehäuse befindlich, das heißt das Gehäuse besteht zur zweifachen Isolation aus einem äußeren Gehäuse sowie einem inneren Gehäuse.

Schließlich sind weitere Drucksensoren aus den Dokumenten GB 2 247 316 A, EP 0 088 270 A2, FR 2 290 612 A und EP 0 194 937 A1 bekannt.

Der Erfindung liegt die Aufgabe zugrunde, die Meßvorrichtung in einfacher Art und Weise derart auszugestalten, daß diese in wasserführenden Umgebungen unter Gewährung der erforderlichen Sicherheit für den Bediener einsetzbar ist.

Diese Aufgabe wird bei einer gattungsgemäßen Meßvorrichtung durch die kennzeichnenden Merkmale des Anspruchs 1 gelöst.

Bei der erfindungsgemäßen Meßvorrichtung sind die Wandungen des äußeren Gehäuses sowie des inneren Gehäuses mit einem gewissen Abstand voneinander zur Ausbildung des Doppelgehäuses angeordnet. Der Signalaufnehmer und/oder die weiteren strom- und/oder spannungsführenden Bauteile befinden sich im inneren Gehäuse. Mit anderen Worten besitzt der Sensor eine doppelte Isolierung zum Meßmedium, womit die Meßvorrichtung vor schädigenden Einflüssen des Meßmediums in einfacher Art und Weise wirksam geschützt ist. Somit wird sichergestellt, daß auch im Fehlerfall, beispielsweise bei Durchstoßung des äußeren Gehäuses und/oder der Membran, kein Wasser mit den stromführenden Bauteilen in Berührung kommt. Weitere Ausgestaltungen der Erfindung sind Gegenstand der Unteransprüche.

Das Gehäuse des Sensors weist somit zwei Isolierungen auf, welche die stromführenden Bauteile gegen das Meßmedium abtrennen. Zweckmäßigerweise kann ein Teil des Meßsystems dabei zwischen den beiden Isolierungen liegen, indem der Signalgeber zwischen den beiden Isolierungen befindlich ist. Dabei kann der Signalgeber zwecks kompakter Ausgestaltung an einem an der Membran befestigten Ansatz, der zweckmäßigerweise einstückig mit der Membran ausgebildet ist, angeordnet sein.

Wie bereits erwähnt, besteht in einer kostengünstigen Ausgestaltung das Gehäuse aus einem äußeren sowie einem inneren Gehäuse. In einer einfach herzustellenden Ausbildung sind das äußere Gehäuse sowie das innere Gehäuse in etwa zylinderförmig ausgestaltet, wobei ein Absatz an der Mantelfläche des Zylinders vorhanden sein kann. Es bietet sich dann weiterhin an, die Membran am äußeren Gehäuse anzuordnen. Dies kann dadurch geschehen, daß die
Membran als Gehäuseabschluß an der Deckelfläche des Zylinders sowie dort einstückig angeordnet ist. Das innere Gehäuse hingegen besitzt an der der Membran zugewandten Deckelfläche des Zylinders eine geschlossene Wandung zum Schutz der innenliegenden stromführenden Bauteile.

Der Sensor läßt sich dadurch in kompakter Weise ausgestalten, daß die Wandung des inneren Gehäuses eine der Membran abgewandte Ausbauchung besitzt, wobei der den Signalgeber aufnehmende Ansatz in die Ausbauchung hineinragt. Auf den Ansatz wirkt eine Feder zur Rückstellung des Signalgebers und/oder der Membran ein. Da das innere Gehäuse beabstandet zum äußeren Gehäuse angeordnet ist, kann sich die Feder an einem Absatz an der Ausbauchung des inneren Gehäuses abstützen.

In einer bevorzugten Weiterbildung besteht der Signalgeber aus einem Permanentmagneten und der Signalaufnehmer aus einem Hallsensor. Der Sensor kann jedoch auch mittels eines induktiven Prinzips arbeiten, wobei der Signalgeber aus einem Ferrit sowie der Signalaufnehmer aus einer Spule besteht. Selbstverständlich läßt sich die erfindungsgemäße doppelte Isolierung auch bei Sensoren, die auf kapazitiven o. dgl. Prinzipien beruhen, mit Vorteil anwenden.

Des einfachen Aufbaus halber bietet es sich an, daß eine Leiterplatte als weiteres strom- und/oder spannungsführendes Bauteil im Inneren des inneren Gehäuses befindlich ist. Der Signalaufnehmer kann dann auf der Leiterplatte mitsamt einer eventuell vorhandenen Auswerteelektronik für das Meßsignal angeordnet sein. Die Anordnung der Leiterplatte im inneren Gehäuse ist zweckmäßigerweise derart, daß der Signalaufiiehmer der Ausbauchung zugewandt ist. Um ein Meßsignal von hoher Güte zu erhalten, ist zweckmäßigerweise der Signalgeber an der dem Signalaufnehmer zugewandten Seite des Ansatzes angeordnet. Schließlich kann noch ein aus dem Gehäuse herausragender Anschlußstecker für Zuleitungen zum Sensor an der Leiterplatte angesteckt sein. Hervorzuheben ist dabei, daß auch der Anschlußstecker als ein weiteres strom- und/oder spannungsführendes Bauteil in entsprechender Weise geschützt ist.

In einer Weiterbildung kann der Raum zwischen dem inneren Gehäuse und dem äußeren Gehäuse über eine zum Äußeren des gesamten Gehäuses reichende Belüftungsöffnung mit der Außenatmosphäre verbunden sein. Dadurch kann zwischen die beiden Gehäuse eingedrungenes Medium, was beispielsweise aufgrund einer Beschädigung des äußeren Gehäuses oder der Membran geschehen kann, nicht an die strom- und/oder spannungsführenden Teile des Signalaufnehmers und/oder die weiteren Bauteile gelangen. Vielmehr wird dieses Medium abgeführt, bevor es schädigend einwirken kann.

Schließlich läßt sich in funktionssicherer Weise das Gehäuse mittels einer Dichtung derart in einer Öffnung an einem ein Fluid als das Medium aufnehmenden Behälter oder Bottich des Geräts einbauen, daß die Membran am äußeren Gehäuse in den Behälter bzw. Bottich hineinragt. Dabei bietet es sich an, daß sich die Dichtung an dem Absatz, der sich an der Mantelfläche des zylinderförmigen äußeren Gehäuse befindet, abstützt.

Die mit der Erfindung erzielten Vorteile bestehen insbesondere darin, daß die Meßvorrichtung direkt unten in den Behälter bzw. Bottich eingebaut werden kann, ohne daß ein Schlauch und eine zusätzliche Befestigung der Meßvorrichtung oberhalb des Fluidstandes notwendig wären. Dadurch ist auch eine Kombination von mehreren Sensoren möglich, beispielsweise zur Messung der Temperatur, der Trübung, des Drucks o. dgl. für das Fluid, was zu einer Verringerung der Kosten führt. Durch die doppelte Isolierung wird kein zusätzlicher Trenntrafo zur Spannungsversorgung der Meßvorrichtung benötigt, wie aus Sicherheitsgründen bisher üblich, wodurch Kosten gespart werden. Weiter vorteilhaft ist, daß die doppelte Isolierung der Leiterplatte zum Medium den Einsatz bei Geräten der Schutzklasse 2 gemäß DIN EN 61140 ermöglicht. Somit ist die Meßvorrichtung in Hausgeräten der Schutzklasse 2 mit der Notwendigkeit einer Druckmessung und eventuell von weiteren Meßgrößen, wie Trübung, Temperatur o. dgl., einsetzbar. Insbesondere ist die Meßvorrichtung für Waschgeräte geeignet, bei denen der Zustand des Wassers im Waschbottich gemessen wird, um mit Hilfe des Meßsignals den Waschvorgang dementsprechend zu steuern.

Ein Ausführungsbeispiel der Erfindung mit verschiedenen Weiterbildungen und Ausgestaltungen ist in den Zeichnungen dargestellt und wird im folgenden näher beschrieben. Es zeigt die
- Fig.: einen Querschnitt durch einen Drucksensor für ein Hausgerät.

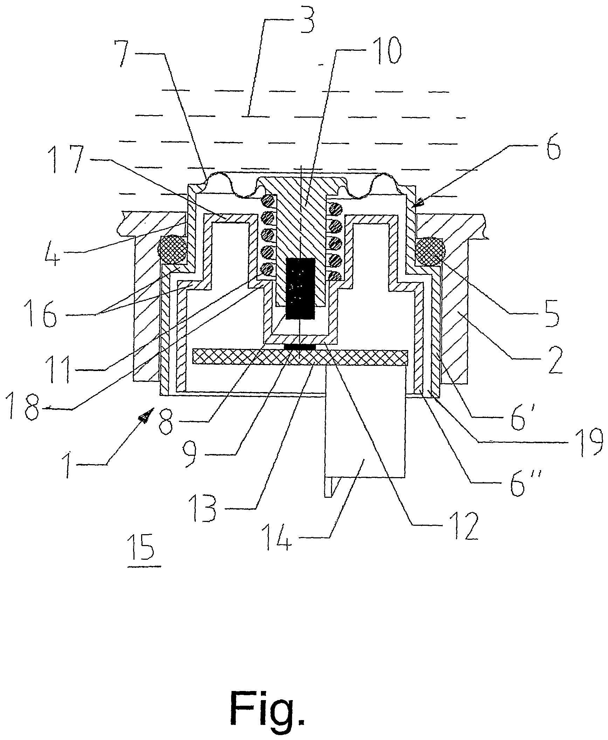

In der Figur ist eine Meßvorrichtung 1 zu sehen, bei der es sich um einen Drucksensor für ein Fluid 3 als zu messendes Medium handelt. Die lediglich schematisch angedeutete Waschflüssigkeit als Fluid 3 befindet sich im als Behälter 2 ausgestalteten Waschbottich einer Waschmaschine. Die Meßvorrichtung 1 ist mittels einer Dichtung 5 abgedichtet in einer Öffnung 4 des Waschbottiches 2 derart eingesetzt, daß die Meßvorrichtung 1 in die im Waschbottich 2 befindliche Waschflüssigkeit 3 hineinragt.

Die Meßvorrichtung 1 besitzt ein Gehäuse 6, wobei im oder am Gehäuse 6 eine mit der Waschflüssigkeit 3 in Kontakt befindliche Membran 7 angeordnet ist. Mit der Membran 7 steht ein Signalgeber 8, bei dem es sich um einen Permanentmagneten handeln kann, in Wirkverbindung. Im Inneren des Gehäuses 6 befindet sich ein mit dem Signalgeber 8 in Zusammenwirkung stehender Signalaufnehmer 9, bei dem es sich beispielsweise um einen elektrischen strom- und/oder spannungsführende Teile aufweisenden Hallsensor handelt. Der Signalaufnehmer 9 erzeugt ein zur Stellung des Signalgebers 8, die entsprechend der Auslenkung der Membran 7 aufgrund des in der Waschflüssigkeit 3 herrschenden Drucks eingenommen wird, korrespondierendes Meßsignal, aus dem wiederum der in der Waschflüssigkeit 3 herrschende Druck ermittelbar ist.

Da die Meßvorrichtung 1 zum Teil in die Waschflüssigkeit 3 hineinragt, ist das Gehäuse 6 im Hinblick auf einen Schutz vor den zerstörenden Einflüssen der Waschflüssigkeit 3 ausgebildet. Hierfür sind die strom- und/oder spannungsführenden Teile des Signalaufnehmers 9 wenigstens zweifach gegenüber dem Äußeren des Gehäuses 6 und damit gegenüber der Waschflüssigkeit 3 elektrisch isoliert. Die zweifache elektrische Isolation wird vorliegend dadurch realisiert, daß der Signalaufnehmer 9 in einer Art von Doppelgehäuse, bestehend aus einem äußeren Gehäuse 6' sowie einem inneren Gehäuse 6", befindlich ist. Während der Signalaufnehmer 9 also innerhalb des inneren Gehäuses 6" befindlich ist, ist der Signalgeber 8, an dem keine elektrische Spannung anliegt, zwischen den beiden Isolierungen 6', 6" angeordnet.

Das Gehäuse 6 besteht gemäß der Figur aus einem äußeren Gehäuse 6' sowie einem inneren Gehäuse 6", die in etwa zylinderförmig ausgestaltet sind und jeweils einen Absatz 16 an der Mantelfläche des Zylinders aufweisen. Die Dichtung 5, die beispielsweise in der Art eines O-Rings ausgestaltet sein kann, stützt sich am Absatz 16 des äußeren Gehäuses 6' ab. Die Membran 7 ist am äußeren Gehäuse 6', das aufgrund der Anordnung in der Öffnung 4 teilweise in den Waschbottich 2 hineinragt, als Gehäuseabschluß an der Deckelfläche des Zylinders angeordnet, so daß die Membran 7 der Waschflüssigkeit 3 ausgesetzt ist. Die Membran 7 kann als separates Teil ausgebildet sein, das am äußeren Gehäuse 6' befestigt ist. Besonders bevorzugt ist jedoch, die Membran 7 einstückig mit dem äußeren Gehäuse 6' auszubilden, beispielsweise indem die Membran 7 am äußeren Gehäuse 6' angespritzt ist oder indem die Wandung des äußeren Gehäuses 6' im Bereich der Membran 7 mit verringerter Dicke ausgebildet ist. Das innere Gehäuse 6" ist mit seinen Wandungen beabstandet zum äußeren Gehäuse 6' angeordnet und verläuft in etwa parallel zu diesem. Schließlich besitzt das innere Gehäuse 6" an der der Membran 7 zugewandten Deckelfläche des Zylinders eine geschlossene Wandung 17, womit ein Eindringen von Waschflüssigkeit 3 in das innere Gehäuse 6" selbst bei einer Undichtigkeit in der Membran 7, beispielsweise durch einen Riß hervorgerufen, mit Sicherheit verhindert ist.

Der aus einem Permanentmagneten bestehende Signalgeber 8 ist an einem Ansatz 10, der an der Membran 7 befestigt ist, an dessen der Membran 7 gegenüberliegenden Seite und damit an der dem Signalaufnehmer 9 zugewandten Seite angeordnet. Auch hier bietet es sich an, den Ansatz 10 einstückig mit der Membran 7 auszubilden. Die Wandung 17 des inneren Gehäuses 6" besitzt eine der Membran 7 abgewandte Ausbauchung 12, in die der Ansatz 10 mitsamt dem Signalgeber 8 hineinragt. Zwischen dem äußeren Gehäuse 6' und dem inneren Gehäuse 6" ist ein Abstand vorhanden, so daß eine an einem Absatz 18 an der Ausbauchung 12 des inneren Gehäuse 6" sich abstützende Feder 11 auf den Ansatz 10 zur Rückstellung des Signalgebers 8 sowie der Membran 7 einwirken kann.

Der Signalaufnehmer 9 ist in der Nähe der Ausbauchung 12 auf einer Leiterplatte 13, und zwar der Ausbauchung 12 zugewandt, angeordnet, wobei die Spannungszuführung zum Signalaufnehmer 9 in bekannter Weise durch Leiterbahnen auf der Leiterplatte 13 erfolgt. Auf der Leiterplatte 13 kann noch eine Auswerteelektronik für das vom Signalaufnehmer 9 erzeugte Meßsignal angeordnet sein. Desweiteren können sonstige mit dem Signalaufnehmer 9 in elektrischer Verbindung stehende elektrische und/oder elektronische Bausteine auf der Leiterplatte 13 befindlich sein, beispielsweise zum Anschluß der Meßvorrichtung 1 an ein Bussystem. Für die elektrischen Zuleitungen zur Meßvorrichtung 1 ist ein Anschlußstecker 14 an der Leiterplatte 13 angesteckt, der an der der Membran 7 abgewandten Seite aus dem Gehäuse 6 herausragt. Hervorzuheben ist, daß die weiteren strom- und/oder spannungsführenden Bauteile, nämlich die Leiterplatte 13 mitsamt dem Signalaufnehmer 9 sowie der Anschlußstecker 14, komplett im Inneren des inneren Gehäuses 6" befindlich ist und somit vor der Waschflüssigkeit 3 geschützt ist.

Um die Druckmessung genauer zu machen, kann die Membran 7 auf der der Waschflüssigkeit 3 abgewandten Seite zur Außenatmosphäre 15 verbunden sein. Hierzu dient eine Belüftungsöffnung 19, die den Raum zwischen dem äußeren Gehäuse 6' und dem inneren Gehäuse 6" zur Außenatmosphäre 15 verbindet. Die Belüftungsöffnung 19 ist so angeordnet, daß der Signalaufnehmer 9 sowie die weiteren elektrischen Bauteile 13, 14 im Falle einer Beschädigung des äußeren Gehäuses 6' außerhalb des Flüssigkeits-Eindringbereichs liegen. Dadurch ist sichergestellt, daß etwaige zwischen die beiden Gehäuse 6', 6" eingedrungene Waschflüssigkeit 3 nicht an die strom- und/oder spannungsführenden Teile des Signalaufnehmers 9 und/oder an die weiteren Bauteile 13, 14 gelangen kann.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann ein solcher Drucksensor auch an sonstigen Hausgeräten, beispielsweise einer Geschirrspülmaschine, Verwendung finden. Im übrigen kann eine solche doppelte Isolierung auch bei sonstigen Meßvorrichtungen, die strom- und/oder spannungsführende Teile zur Erzeugung eines Meßsignales entsprechend dem zu messenden Zustand eines Mediums besitzen, beispielsweise bei einem Wegsensor, bei einem Durchflußsensor o. dgl., in vorteilhafter Weise eingesetzt werden. Im übrigen eignet sich eine solche doppelte Isolierung auch bei Meßvorrichtungen, die anstelle einer elastischen Membran im herkömmlichen Sinne eine im wesentlichen starre äußere Gehäusewandung besitzen. Auch eine solche Gehäusewandung, die mit dem zu messenden Medium im Kontakt steht, wird im Sinne der Erfindung als Membran angesehen. Es werden dabei wiederum die erfindungsgemäßen Vorteile erzielt, nämlich einen Schutz vor elektrischen Kurzschlüssen bei den strom- und/oder spannungsführenden Teilen im Falle von Undichtigkeiten im äußeren Gehäuse.

### Bezugszeichen-Liste:

- 1:: Meßvorrichtung
- 2:: Waschbottich / Behälter
- 3:: Waschflüssigkeit / Fluid
- 4:: Öffnung (im Waschbottich)
- 5:: Dichtung
- 6:: Gehäuse
- 6', 6":: Doppelgehäuse / (äußeres / inneres) Gehäuse / Isolierung
- 7:: Membran
- 8:: Signalgeber
- 9:: Signalaufnehmer
- 10:: Ansatz (für Signalgeber)
- 11:: Feder
- 12:: Ausbauchung (am inneren Gehäuse)
- 13:: Leiterplatte / Bauteil
- 14:: Anschlußstecker / Bauteil
- 15:: Außenatmosphäre
- 16:: Absatz (am äußeren / inneren Gehäuse)
- 17:: (geschlossene) Wandung (des inneren Gehäuses)
- 18:: Absatz (an der Ausbauchung)
- 19:: Belüftungsöffnung

## Patentansprüche

1. Drucksensor für ein zu messendes Medium mit einem Gehäuse (6), und mit einer mit dem Medium in Kontakt bringbaren Membran (7), wobei ein Signalgeber (8) mit der Membran (7) in Wirkverbindung steht, wobei ein mit dem Signalgeber (8) in Zusammenwirkung stehender, strom- und/oder spannungsführende Teile aufweisender Signalaufnehmer (9) zur Erzeugung eines Meßsignals für das Medium im Inneren des Gehäuses (6) befindlich ist, wobei der Signalaufnehmer (9) zumindest mit dessen strom- und/oder spannungsführenden Teilen und/oder weitere strom- und/oder spannungsführende, mit dem Signalaufnehmer (9) in elektrischer Verbindung stehende Bauteile (13, 14) zweifach gegenüber dem Medium isoliert sind, wobei das Gehäuse (6) zur zweifachen Isolation aus einem äußeren Gehäuse (6') sowie einem inneren Gehäuse (6") als Doppelgehäuse (6', 6") besteht, wobei die Membran (7) am äußeren Gehäuse (6') angeordnet ist, und wobei die Wandungen des äußeren Gehäuses (6') sowie des inneren Gehäuses (6") mit einem Abstand voneinander sowie in etwa parallel verlaufend angeordnet sind, **dadurch gekennzeichnet daß** der Signalaufnehmer (9) und/oder die weiteren Bauteile (13, 14) im inneren Gehäuse (6") befindlich sind.

2. Drucksensor nach Anspruch 1, **dadurch gekennzeichnet, daß** das äußere Gehäuse (6') sowie das innere Gehäuse (6") in etwa zylinderförmig mit gegebenenfalls einem Absatz (16) an der Mantelfläche des zylinderförmigen Gehäuses (6', 6") ausgestaltet sind, daß vorzugsweise die Membran (7) als Gehäuseabschluß an der Deckelfläche des zylinderförmigen äußeren Gehäuses (6'), sowie gegebenenfalls einstückig, angeordnet ist, und daß weiter vorzugsweise das innere Gehäuse (6") an der der Membran (7) zugewandten Deckelfläche des zylinderförmigen inneren Gehäuses (6") eine geschlossene Wandung (17) besitzt.

3. Drucksensor nach Anspruch 1 oder 2, **dadurch gekennzeichnet, daß** der Signalgeber (8) zwischen den beiden Isolierungen (6', 6") befindlich ist, und daß vorzugsweise der Signalgeber (8) an einem an der Membran (7) befestigten Ansatz (10), der insbesondere einstückig mit der Membran (7) ausgebildet ist, angeordnet ist.

4. Drucksensor nach Anspruch 1, 2 oder 3, **dadurch gekennzeichnet, daß** die Wandung (17) des inneren Gehäuses (6") eine der Membran (7) abgewandte Ausbauchung (12) besitzt, daß vorzugsweise der Ansatz (10) in die Ausbauchung (12) hineinragt, daß weiter vorzugsweise das innere Gehäuse (6") beabstandet zum äußeren Gehäuse (6') angeordnet ist, derart daß eine Feder (11) auf den Ansatz (10) zur Rückstellung des Signalgebers (8) und/oder der Membran (7) einwirkt, und daß noch weiter vorzugsweise die Feder (11) sich an einem Absatz (18) an der Ausbauchung (12) des inneren Gehäuses (6") abstützt.

5. Drucksensor nach einem der Ansprüche 1 bis 4, **dadurch gekennzeichnet, daß** der Signalgeber (8) aus einem Magneten besteht, und daß vorzugsweise der Signalaufnehmer (9) aus einem Hallsensor besteht.

6. Drucksensor nach einem der Ansprüche 1 bis 5, **dadurch gekennzeichnet, daß** eine Leiterplatte (13) als weiteres strom- und/oder spannungsführendes Bauteil im Inneren des inneren Gehäuses (6") befindlich ist, daß vorzugsweise der Signalaufnehmer (9) auf der Leiterplatte (13) angeordnet ist, insbesondere derart daß der Signalaufnehmer (9) der Ausbauchung (12) zugewandt ist, daß weiter vorzugsweise der Signalgeber (8) an der dem Signalaufnehmer (9) zugewandten Seite des Ansatzes (10) angeordnet ist, und daß noch weiter vorzugsweise ein aus dem Gehäuse (6) herausragender Anschlußstecker (14) für Zuleitungen als ein weiteres strom- und/oder spannungsführendes Bauteil an der Leiterplatte (13) angesteckt ist.

7. Drucksensor nach einem der Ansprüche 1 bis 6, **dadurch gekennzeichnet, daß** der Raum zwischen dem inneren Gehäuse (6") und dem äußeren Gehäuse (6') über eine Belüftungsöffnung (19) mit der Außenatmosphäre (15) verbunden ist, derart daß zwischen den beiden Gehäusen (6', 6") eingedrungenes Medium abgeführt wird und nicht an die strom- und/oder spannungsführenden Teile des Signalaufnehmers (9) und/oder an die weiteren Bauteile (13, 14) gelangen kann.

8. Drucksensor nach einem der Ansprüche 1 bis 7, **dadurch gekennzeichnet, daß** das Gehäuse (6) mittels einer Dichtung (5) derart in einer Öffnung (4) an einem ein Fluid (3) aufnehmenden Behälter (2) eingebaut ist, daß die Membran (7) am äußeren Gehäuse (6') in den Behälter (2) hineinragt.

## Claims

1. A pressure sensor for a medium to be measured, having a housing (6) and a membrane (7) that can be brought into contact with the medium, wherein a signal transmitter (8) is in operative connection with the membrane (7), wherein a signal receiver (9) comprising current and/or voltage-carrying parts and interacting with the signal transmitter (8) is located in the interior of the housing (6) in order to generate a measurement signal for the medium, wherein the signal receiver (9) at least with its current and/or voltage carrying parts and/or further current and/or voltage carrying components (13,14) that are in electrical contact with the signal receiver (9) are insulated twofold against the medium, wherein for twofold insulation the housing (6) consists of an outer housing (6') and an inner housing (6") as a double housing (6',6"), wherein the membrane (7) is arranged on the outer housing (6'), and wherein the walls of the outer housing (6') and of the inner housing (6") are arranged with a separation from each other and extending approximately in parallel, **characterised in that** the signal receiver (9) and/or the further components (13, 14) are located in the inner housing (6").

2. The pressure sensor according to claim 1, **characterised in that** the outer housing (6') and the inner housing (6") are designed approximately cylindrical, optionally with a shoulder (16) on the outer surface of the cylindrical housing (6', 6"), **in that** the membrane (7) is preferably arranged as a housing closure on the cover surface of the cylindrical outer housing (6'), and optionally as a single piece, and **in that** more preferably the inner housing (6") has a closed wall (17) on the cover surface of the cylindrical inner housing (6") facing the membrane (7).

3. The pressure sensor according to claim 1 or 2, **characterised in that** the signal transmitter (8) is located between the two insulations (6', 6"), and **in that** the signal transmitter (8) is preferably arranged on a projection (10) attached to the membrane (7), which is formed in particular as a single piece with the membrane (7).

4. The pressure sensor according to claim 1, 2 or 3, **characterised in that** the wall (17) of the inner housing (6") has a bulge (12) facing away from the membrane (7), **in that** preferably the projection (10) protrudes into the bulge (12), **in that** further preferably the inner housing (6") is arranged spaced apart from the outer housing (6'), such that a spring (11) acts on the projection (10) in order to reset the signal transmitter (8) and/or the membrane (7), and **in that** yet more preferably the spring (11) is supported on a shoulder (18) on the bulge (12) of the inner housing (6").

5. The pressure sensor according to one of claims 1 to 4, **characterised in that** signal transmitter (8) consists of a magnet, and **in that** the signal receiver (9) preferably consists of a Hall sensor.

6. The pressure sensor according to one of claims 1 to 5, **characterised in that** a printed circuit board (13) is located in the inside of the inner housing (6") as a further current and/or voltage-carrying component, **in that** the signal receiver (9) is preferably arranged on the printed circuit board (13), in particular such that the signal receiver (9) is facing the bulge (12), **in that** more preferably the signal transmitter (8) is arranged on the side of the projection (10) facing the signal receiver (9), and **in that** yet more preferably a connector plug (14), protruding from the housing (6) for supply lines as a further current and/or voltage-carrying component, is plugged into the printed circuit board (13).

7. The pressure sensor according to one of claims 1 to 6, **characterised in that** the space between the inner housing (6") and the outer housing (6') is connected to the outside atmosphere (15) via a ventilation opening (19), such that medium penetrating between the two housings (6', 6") is removed and cannot reach the current and/or voltage-carrying parts of the signal receiver (9) and/or the further components (13, 14).

8. The pressure sensor according to one of claims 1 to 7, **characterised in that** the housing (6) is installed, by means of a seal (5), in an opening (4) on a container (2) receiving a fluid (3), in such a way that the membrane (7) on the outer housing (6') projects into the container (2).

## Revendications

1. Capteur de pression pour un milieu à mesurer avec un boîtier (6) et avec une membrane (7) pouvant être mise en contact avec le milieu, dans lequel un émetteur de signal (8) est en liaison active avec la membrane (7), dans lequel un récepteur de signal (9) coopérant avec l'émetteur de signal (8) présentant des pièces de transmission de courant et/ou de tension pour la production d'un signal de mesure pour le milieu se trouve à l'intérieur du boîtier (6), dans lequel le récepteur de signal (9) au moins avec ses pièces de transmission de courant et/ou de tension et/ou d'autres composants (13, 14) de transmission de courant et/ou de tension en liaison électrique avec le récepteur de signal (9) sont isolés doublement par rapport au milieu, dans lequel le boîtier (6) pour une double isolation est constitué d'un boîtier externe (6') et d'un boîtier interne (6") sous forme de double boîtier (6', 6"), dans lequel la membrane (7) est disposée sur le boîtier externe (6') et dans lequel les parois du boîtier externe (6') ainsi que du boîtier interne (6") sont disposées s'étendant approximativement parallèlement et à une distance les unes des autres, **caractérisé en ce que** le récepteur de signal (9) et/ou les autres composants (13, 14) se trouvent dans le boîtier interne (6").

2. Capteur de pression selon la revendication 1, **caractérisé en ce que** le boîtier externe (6') et le boîtier interne (6") sont conçus en forme approximativement cylindrique avec le cas échéant un débouché (16) sur la surface d'enveloppe du boîtier cylindrique (6', 6"), **en ce que**, de préférence, la membrane (7) est disposé sous forme de fermeture de boîtier sur la surface de couvercle du boîtier externe de forme cylindrique (6'), ainsi que le cas échéant d'un seul tenant et **en ce que**, de préférence encore, le boîtier interne (6") possède, sur la surface de couvercle orientée vers la membrane (7) du boîtier interne en forme cylindrique (6"), une paroi fermée (17).

3. Capteur de pression selon la revendication 1 ou 2, **caractérisé en ce que** l'émetteur de signal (8) se trouve entre les deux isolations (6', 6") et **en ce que**, de préférence, l'émetteur de signal (8) est disposé sur un épaulement (10) fixé sur la membrane (7), qui est formé notamment d'un seul tenant avec la membrane (7).

4. Capteur de pression selon la revendication 1, 2 ou 3, **caractérisé en ce que** la paroi (17) du boîtier interne (6") possède une protubérance (12) tournée à l'écart de la membrane (7), **en ce que**, de préférence, l'épaulement (10) fait saillie dans la protubérance (12), **en ce que**, de préférence encore, le boîtier interne (6") est disposé à l'écart du boîtier externe (6'), de sorte qu'un ressort (11) agisse sur l'épaulement (10) pour le rappel de l'émetteur de signal (8) et/ou de la membrane (7) et **en ce que**, de préférence encore, le ressort (11) s'appuie sur un débouché (18) sur la protubérance (12) du boîtier interne (6").

5. Capteur de pression selon une des revendications 1 à 4, **caractérisé en ce que** l'émetteur de signal (8) est constitué d'un aimant et **en ce que**, de préférence, le récepteur de signal (9) est constitué d'un capteur de Hall.

6. Capteur de pression selon une des revendications 1 à 5, **caractérisé en ce qu'**un circuit imprimé (13), en guise d'autre composant de transmission de courant et/ou de tension se trouve à l'intérieur du boîtier interne (6"), **en ce que**, de préférence, le récepteur de signal (9) est disposé sur le circuit imprimé (13), en particulier de sorte que le récepteur de signal (9) soit tourné vers la protubérance (12), **en ce que**, de préférence encore, l'émetteur de signal (8) est disposé sur le côté tourné vers le récepteur de signal (9) de l'épaulement (10) et **en ce que**, de préférence encore, une fiche de raccordement (14) faisant saillie hors du boîtier (6) pour l'alimentation sous forme d'un autre composant de transmission de courant et/ou de tension est branchée sur le circuit imprimé (13).

7. Capteur de pression selon une des revendications 1 à 6, **caractérisé en ce que** l'espace entre le boîtier interne (6") et le boîtier externe (6') est relié par le biais d'une ouverture de ventilation (19) avec l'atmosphère externe (15), de sorte que, entre les deux boîtiers (6', 6"), un milieu pénétrant soit guidé et ne puisse pas atteindre les pièces de transmission de courant et/ou de tension du récepteur de signal (9) et/ou les autres composants (13, 14).

8. Capteur de pression selon une des revendications 1 à 7, **caractérisé en ce que** le boîtier (6) est inséré, au moyen d'un joint (5), dans une ouverture (4) sur un récipient (2) recevant un fluide (3), de sorte que la membrane (7) sur le boîtier externe (6') fasse saillie dans le récipient (2).
